# EUROPEAN PATENT SPECIFICATION

(11) **EP 2 930 503 B1**
(45) Date of publication and mention of the grant of the patent: **09.11.2022**
(21) Application number: 13862460.6
(22) Date of filing: 03.12.2013
(51) Int. Cl.: G01N 27/407, G01N 27/419

(54) **SENSOR ELEMENT AND GAS SENSOR**
SENSORELEMENT UND GASSENSOR
ÉLÉMENT DE CAPTEUR ET CAPTEUR DE GAZ

(30) Priority: 10.12.2012 JP 2012269569
(43) Date of publication of application: 14.10.2015
(73) Proprietor: NGK Insulators, Ltd., Nagoya-City, Aichi-ken 467-8530 (JP)
(72) Inventor: MURAKAMI, Mika, Nagoya-city, Aichi 467-8530 (JP); HORISAKA, Sumiko, Nagoya-city, Aichi 467-8530 (JP); FUJITA, Hiroki, Nagoya-city, Aichi 467-8530 (JP)
(74) Representative: Mewburn Ellis LLP
(86) International application number: PCT/JP2013/082415
(87) International publication number: WO 2014/091963

(56) References cited:
- JP-A- 2010 025 793
- JP-A- 2010 025 793
- JP-A- 2011 209 280
- JP-A- 2011 209 280
- JP-A- 2011 214 853
- JP-A- 2011 214 853
- US-A- 5 419 828
- US-A1- 2004 112 765

## Description

### Technical Field

The present invention relates to a sensor element and a gas sensor.

### Background Art

There is a hitherto known gas sensor that detects the concentration of a specific gas, such as NOx, contained in a measurement-object gas, such as exhaust gas from an automobile.

For example, PTL 1 and PTL 2 and JP2011214853,JP2011209280,JP2010025793 each disclose a gas sensor that includes a long plate-like sensor element including a plurality of air-tight oxygen-ion-conductive solid-electrolyte layers that are stacked one on top of another.

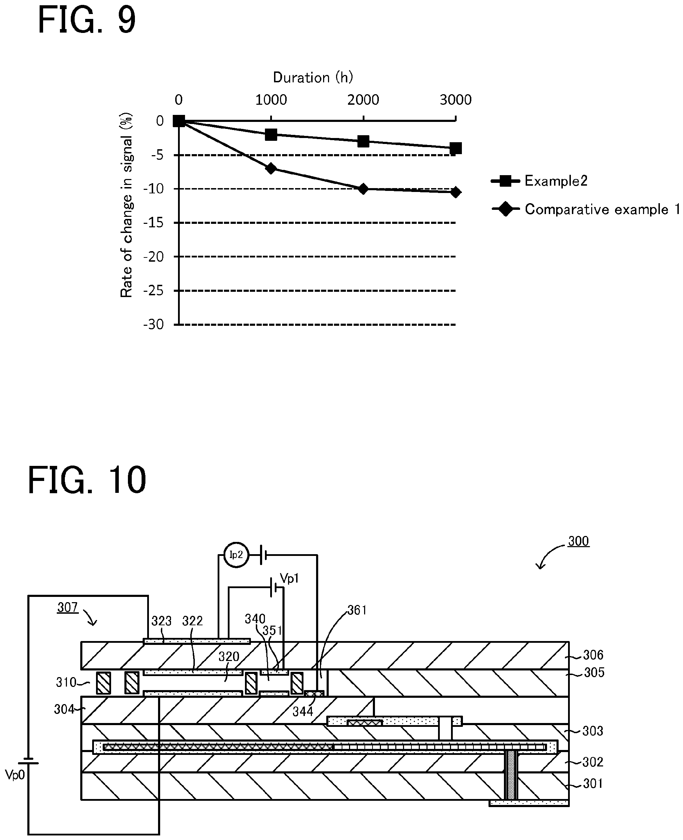

Fig. 10 is a schematic sectional view illustrating an exemplary outline configuration of a gas sensor 300 according to the above known technology. As illustrated in Fig. 10, the gas sensor 300 includes a sensor element 307. The sensor element 307 is an element having a multilayer structure including fine oxygen-ion-conductive solid-electrolyte layers 301 to 306. In the sensor element 307, a measurement-object-gas-flowing portion into which a measurement-object gas is to be introduced is provided between the lower surface of the solid-electrolyte layer 306 and the upper surface of the solid-electrolyte layer 304. The measurement-object-gas-flowing portion includes a gas inlet 310 and first to third internal cavities 320, 340, and 361. An inner pump electrode 322 is provided in the first internal cavity 320. An auxiliary-pump electrode 351 is provided in the second internal cavity 340. A measuring electrode 344 is provided in the third internal cavity 361. An outer pump electrode 323 is provided on the upper surface of the solid-electrolyte layer 306. In the gas sensor 300, when a measurement-object gas is introduced into the first internal cavity 320 of the measurement-object-gas-flowing portion 310, oxygen is pumped out or pumped in between the first internal cavity 320 and the outside of the sensor element 307 with a control voltage Vp0 applied between the outer pump electrode 323 and the inner pump electrode 322. Subsequently, when the measurement-object gas is introduced into the second internal cavity 340, oxygen is pumped out or pumped in between the second internal cavity 340 and the outside of the sensor element 307 with a control voltage Vp1 applied between the outer pump electrode 323 and the auxiliary-pump electrode 351. Thus, the measurement-object gas whose oxygen concentration has been controlled while passing through the first internal cavity 320 and the second internal cavity 340 is introduced into the third internal cavity 361. Then, the concentration of a specific gas in the measurement-object gas is detected on the basis of a current Ip2 carried in pumping out or pumping in oxygen via the outer pump electrode 323 and the measuring electrode 344.

### Citation List

### Patent Literature

PTL 1: Japanese Unexamined Patent Application Publication No. 2006-284223
PTL 2: Japanese Unexamined Patent Application Publication No. 2011-102797

### Summary of Invention

### Technical Problem

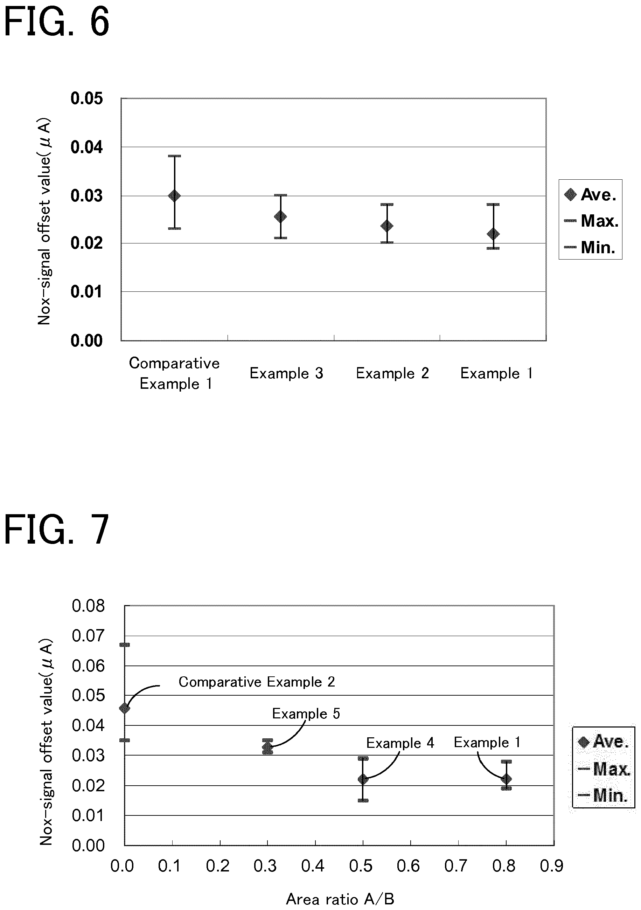

In such a known gas sensor, the migration of oxygen ions may occur even in portions of the outer surfaces of the multilayer structure (the sensor element) including the solid-electrolyte layers where no electrodes are provided and the solid electrolyte is exposed. For example, in the gas sensor 300 illustrated in Fig. 10, oxygen ions occasionally pass through the solid-electrolyte layer 306, without the intervention of any electrodes, between the third internal cavity 361 and the atmosphere (the measurement-object gas) around a portion of the upper surface of the solid-electrolyte layer 306 that is immediately above the third internal cavity 361. Such electrode-less migration of oxygen ions is more likely to occur at higher temperature or with a larger difference in the oxygen concentration between the inside and the outside of the sensor element. Furthermore, such migration of oxygen ions may lower the accuracy in the detection of concentration of the specific gas contained in the measurement-object gas. For example, if the electrode-less migration of oxygen ions occurs in the gas sensor 300 illustrated in Fig. 6, the current Ip2 may include noise generated in accordance with the migration of oxygen ions. In such a case, the accuracy in the detection of specific-gas concentration may be lowered. The amount of current, such as the current Ip2, used for the detection of specific-gas concentration is usually very small. Therefore, such a current is susceptible to the electrode-less migration of oxygen ions.

In view of the above, it is a major object of the present invention to suppress, in a sensor element, the electrode-less migration of oxygen ions between a space in which the measuring-electrode is set and the outside of a multilayer structure.

### Solution to Problem

To achieve the above object, the present invention employs the following measures.

A sensor element of the present invention is defined by claim 1.

The sensor element includes the blocking portion including at least one of the inner blocking layer and the outer blocking layer. The inner blocking layer covers at least part of the exposed portion where the solid-electrolyte layers are exposed as the inner surfaces of the space which the measuring-electrode is set. The outer blocking layer covers at least part of the nearest portion that is at the shortest distance from the space in which the measuring-electrode is set among portions of outer surfaces of the multilayer structure where the solid-electrolyte layers are exposed. The inner blocking layer and the outer blocking layer do not each conduct (or do not each have electrical conductivity with respect to) one or more kinds of substances that contain oxygen. Hence, the migration of oxygen ions is suppressed in the part of the exposed portion of the solid-electrolyte layers that is covered with the blocking portion. That is, the migration of oxygen ions between the space in which the measuring-electrode is set and the outside of the multilayer structure can be suppressed from occurring without the intervention of any electrodes such as the measuring electrode and the outer electrode. In a gas sensor including the sensor element according to the present invention, for example, the influence of the electrode-less migration of oxygen ions upon the current flowing between the measuring electrode and the outer electrode can be suppressed, and the accuracy in the detection of concentration of the specific gas in the measurement-object gas can be further improved. As the distance between the space which the measuring-electrode is set and the outside of the multilayer structure becomes shorter, the electrode-less migration of oxygen ions between the space in which the measuring-electrode is set and the outside of the multilayer structure is more likely to occur. In the gas sensor according to the present invention, if the blocking portion includes the outer blocking layer, the outer blocking layer is provided over at least part of the nearest portion. Thus, the electrode-less migration of oxygen ions can be more assuredly suppressed.

Here, examples of "substances that contain oxygen" include molecules that contain oxygen (O) in their chemical formulae, such as O₂, CO, CO₂, NOx, and H₂O; and ions that contain oxygen (O) in their chemical formulae. Examples of "ions that contain oxygen" include oxygen ions (also referred to as oxide ions) such as O²⁻ and O⁻. Furthermore, the inner blocking layer and the outer blocking layer do not each need to conduct one or more kinds of molecules that contain oxygen, or each do not need to conduct one or more kinds of ions that contain oxygen. Alternatively, the inner blocking layer and the outer blocking layer each do not need to conduct one or more kinds of molecules that contain oxygen and each do not need to conduct one or more kinds of ions that contain oxygen. Moreover, the kinds of substances that the inner blocking layer does not conduct and the kinds of substances that the outer blocking layer does not conduct may be different or the same. When a substance, such as molecules that contain oxygen or ions that contain oxygen (other than oxygen ions), reaches the surface of a solid-electrolyte layer, the substance generates oxygen ions. Such oxygen ions may migrate through the solid electrolyte. Therefore, as long as the blocking layer (the inner blocking layer or the outer blocking layer) does not conduct not only oxygen ions but also other substances that contain oxygen, the above effect of suppressing the migration of oxygen ions can be produced. Preferably, the blocking portion does not conduct one or more kinds of substances that contain oxygen and that are present in the measurement-object gas. Thus, the electrode-less migration of oxygen ions can be more assuredly suppressed. The capability of the blocking portion's blocking the surface of the solid electrolyte from the measurement-object gas (not only the components of the measurement-object gas but also the ionized components of the measurement-object gas) is preferably as high as possible. Specifically, the porosity of the blocking portion is 5% or lower. It is also preferable that the outer blocking layer be provided in a portion of the multilayer structure that is exposed to the measurement-object gas. The electrode-less migration of oxygen ions is more likely to occur in the portion to be exposed to the measurement-object gas. Therefore, it is worth providing the outer blocking layer in that portion.

In the sensor element according to the present invention, the blocking portion may include the outer blocking layer, and the outer blocking layer may cover the entirety of the nearest portion. Thus, the effect of the outer blocking layer's suppressing the electrode-less migration of oxygen ions is further enhanced.

In the sensor element according to the present invention, an area ratio A/B of a covered area A by which the blocking portion covers the solid-electrolyte layers to an exposed area B by which the solid-electrolyte layers are exposed as the inner surfaces of the space in which the measuring-electrode is set may be 0.3 or greater. Thus, the effect of the blocking portion's suppressing the electrode-less migration of oxygen ions is further enhanced. The area ratio A/B is preferably 0.5 or greater. The effect of suppressing the electrode-less migration of oxygen ions is enhanced as the area ratio A/B becomes greater. If the blocking portion includes both the outer blocking layer and the inner blocking layer, the covered area A corresponds to the sum of the area by which the outer blocking layer covers the solid-electrolyte layers and the area by which the inner blocking layer covers the solid-electrolyte layers. The exposed area B includes the area of a portion that is covered with the inner blocking layer. The area by which the outer blocking layer covers the solid-electrolyte layers is preferably larger than or equal to the area by which the measuring electrode covers the solid-electrolyte layers. Likewise, the area by which the inner blocking layer covers the solid-electrolyte layer is preferably larger than or equal to the area by which the measuring electrode covers the solid-electrolyte layers.

In the sensor element according to the present invention, it is preferable that the blocking portion include the inner blocking layer, and the inner blocking layer have a thickness of 1 µm to 30 µm. If the thickness of the inner blocking layer is set to 1 µm or larger, the effect of suppressing the electrode-less migration of oxygen ions can be more assuredly produced. If the thickness of the inner blocking layer is set to 30 µm or smaller, the inner blocking layer can be relatively easily formed on a solid-electrolyte layer. Likewise, if the blocking portion includes the outer blocking layer, it is preferable that the outer blocking layer have a thickness of 1 µm to 30 µm.

In the sensor element according to the present invention, the blocking portion may include the inner blocking layer, and the inner blocking layer may cover at least part of the inner surfaces of the space in which the measuring-electrode is set, the part being opposite the nearest portion. As described above, as the distance between the space in which the measuring-electrode is set and the outside of the multilayer structure becomes shorter, the electrode-less migration of oxygen ions between the space in which the measuring-electrode is set and the outside of the multilayer structure is more likely to occur. Therefore, if at least part of the portion that is opposite the nearest portion is covered with the inner blocking layer, the electrode-less migration of oxygen ions can be further suppressed. Herein, the "part of the inner surfaces of the space in which the measuring-electrode is set, the part being opposite the nearest portion" may be, for example, a portion that is across the solid-electrolyte layer from the nearest portion, or a portion of the inner surfaces of the space onto which a portion of the outer surfaces of the multilayer structure that has the nearest portion is projected perpendicularly to the nearest portion. In that case, the inner blocking layer may cover the entirety of the portion of the inner surfaces of the space in which the measuring-electrode is set, the portion being opposite the nearest portion. Thus, the effect of suppressing the electrode-less migration of oxygen ions is further enhanced.

In the sensor element according to the present invention, the blocking portion may include the inner blocking layer and the outer blocking layer. Thus, the effect of suppressing the electrode-less migration of oxygen ions becomes higher than in the case where the blocking layer includes only one of the inner blocking layer and the outer blocking layer.

In the sensor element according to the present invention, the multilayer structure may be a rectangular parallelepiped, the blocking portion may include the outer blocking layer, the outer blocking layer may be provided on each of a plurality of outer surfaces of the multilayer structure, and the outer blocking layer may cover the entirety of a projection area defined as a projection of the space that is projected perpendicularly onto each of the plurality of outer surfaces each having the outer blocking layer. If the multilayer structure is a rectangular parallelepiped and has a plurality of outer surfaces, the projection area defined as a projection of the space that is projected perpendicularly onto each of the plurality of outer surfaces corresponds to an area of each of the outer surfaces where the distance to the space in which the measuring-electrode is set is shortest. Therefore, in the case where the outer blocking layer is provided on each of the plurality of outer surfaces, if the outer blocking layer provided on each of the outer surfaces covers the entirety of the projection area, the effect of suppressing the electrode-less migration of oxygen ions can be further enhanced.

A gas sensor according to the present invention includes the sensor element according to any of the aspects of the present invention. Therefore, the gas sensor according to the present invention produces the same advantageous effects as the sensor element according to the present invention. For example, the influence of the electrode-less migration of oxygen ions upon the current flowing between the measuring electrode and the outer electrode can be suppressed, and the accuracy in the detection of concentration of the specific gas in the measurement-object gas can be further improved.

In the gas sensor according to the present invention, a first internal cavity and a second internal cavity may be provided in that order in a region of the measurement-object-gas-flowing portion from an inlet for the measurement-object gas to the space in which the measuring-electrode is set. Furthermore, the gas sensor may include a reference electrode provided in the multilayer structure and into which a reference gas with reference to which a concentration of a specific gas in the measurement-object gas is detected is introduced; detecting device that detects the concentration of the specific gas in the measurement-object gas on the basis of a current carried when the measurement-object gas is introduced into the space in which the measuring-electrode is set and when oxygen is pumped out or pumped in via the measuring electrode and the outer electrode; a main-pump cell that applies a control voltage between an outer main-pump electrode and an inner main-pump electrode on the basis of an electromotive force generated between the inner main-pump electrode and the reference electrode, the inner main-pump electrode being provided on a portion of solid electrolyte that faces the first internal cavity, the outer main-pump electrode being provided on an outer surface of the multilayer structure, the main-pump cell pumping out or pumping in oxygen via the inner main-pump electrode and the outer main-pump electrode such that the concentration of oxygen in the first internal cavity becomes a predetermined main-pump target concentration; and an auxiliary-pump cell that applies a control voltage between an outer auxiliary-pump electrode and an inner auxiliary-pump electrode on the basis of an electromotive force generated between the inner auxiliary-pump electrode and the reference electrode, the inner auxiliary-pump electrode being provided on a portion of the solid-electrolyte layers that faces the second internal cavity, the outer auxiliary-pump electrode being provided on an outer surface of the multilayer structure, the auxiliary-pump cell pumping out or pumping in oxygen via the inner auxiliary-pump electrode and the outer auxiliary-pump electrode such that the concentration of oxygen in the second internal cavity becomes a predetermined auxiliary-pump target concentration. Thus, when the measurement-object gas flows through the first internal cavity, the concentration of oxygen in the measurement-object gas is adjusted to the predetermined main-pump target concentration. Furthermore, when the measurement-object gas flows through the second internal cavity, the concentration of oxygen in the measurement-object gas is adjusted to the predetermined auxiliary-pump target concentration. Therefore, the concentration of oxygen in the measurement-object gas that reaches the space in which the measuring-electrode is set can be maintained at a constant level with high accuracy. Consequently, the accuracy in the detection of concentration of the specific gas in the measurement-object gas can be further improved.

### Brief Description of Drawings

Fig. 1 is a schematic sectional view of a gas sensor 100.
Fig. 2 is a sectional view taken along a line A-A illustrated in Fig. 1.
Fig. 3 is a view seen in a direction B illustrated in Fig. 2.
Fig. 4 is a perspective view of a gas sensor 100 according to a modification.
Fig. 5 is a schematic sectional view of a gas sensor 100 according to another modification.
Fig. 6 is a graph illustrating NOx-signal offset values in Examples 1 to 3 and Comparative Example 1.
Fig. 7 is a graph illustrating NOx-signal offset values in Examples 1, 4, and 5 and Comparative Example 2.
Fig. 8 is a graph illustrating a borderline where the NOx-signal offset value turns good while the thickness and the porosity of a blocking portion 65 are changed among different values.
Fig. 9 is a graph illustrating the rates of changes in the signals obtained in Example 2 and Comparative Example 1.
Fig. 10 is a schematic sectional view of a gas sensor 300 according to a known technology.

### Description of Embodiments

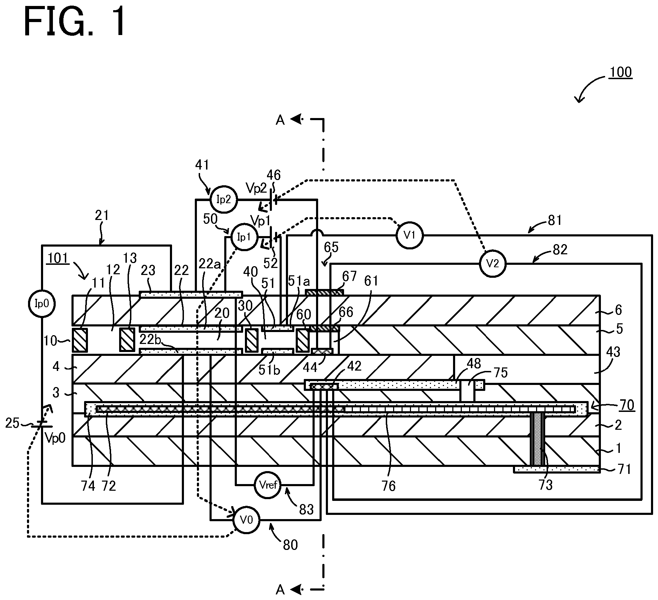

An outline configuration of a gas sensor 100 including a sensor element 101 according to an exemplary embodiment of the present invention will now be described. Fig. 1 is a schematic sectional view illustrating an exemplary outline configuration of the gas sensor 100. The gas sensor 100 includes the sensor element 101 that detects the concentration of NOx in a measurement-object gas.

The sensor element 101 is an element having a multilayer structure including six oxygen-ion-conductive solid-electrolyte layers each made of zirconia (ZrO₂) or the like and that are stacked one on top of another in that order from the lower side in Fig. 1. The six layers are a first substrate layer 1, a second substrate layer 2, a third substrate layer 3, a first solid-electrolyte layer 4, a spacer layer 5, and a second solid-electrolyte layer 6. The solid electrolyte forming the six layers has a fine, air-tight structure. The sensor element 101 is manufactured as follows, for example. Predetermined processing operations, printing of circuit patterns, and so forth are performed on ceramic green sheets that are to become the respective layers. The ceramic green sheets are then stacked one on top of another, and the stack is fired into an integral body.

A gas inlet 10, a first diffusion-controlling portion 11, a buffer space 12, a second diffusion-controlling portion 13, a first internal cavity 20, a third diffusion-controlling portion 30, a second internal cavity 40, a fourth diffusion-controlling portion 60, and a third internal cavity 61 are provided at one end (on the left side in Fig. 1) of the sensor element 101 and between the lower surface of the second solid-electrolyte layer 6 and the upper surface of the first solid-electrolyte layer 4 in such a manner as to be adjacent to and communicate with one another in the above order.

A combination of the gas inlet 10, the buffer space 12, the first internal cavity 20, the second internal cavity 40, and the third internal cavity 61 forms an internal space of the sensor element 101 that is provided by removing a portion of the spacer layer 5. The upper side, the lower side, and the lateral sides of the internal space are defined by the lower surface of the second solid-electrolyte layer 6, the upper surface of the first solid-electrolyte layer 4, and side surfaces of the spacer layer 5, respectively.

The first diffusion-controlling portion 11, the second diffusion-controlling portion 13, the third diffusion-controlling portion 30, and the fourth diffusion-controlling portion 60 are each provided horizontally as two slits (that is, the longitudinal direction of the openings corresponds to a direction perpendicular to the plane of the page of Fig. 1). A region extending from the gas inlet 10 to the third internal cavity 61 is also referred to as measurement-object-gas-flowing portion.

A reference-gas-introducing space 43 is provided at a position farther from the one end than the measurement-object-gas-flowing portion. The reference-gas-introducing space 43 is provided between the upper surface of the third substrate layer 3 and the lower surface of the spacer layer 5. The lateral sides of the reference-gas-introducing space 43 are defined by side surfaces of the first solid-electrolyte layer 4. A reference gas, such as atmospheric air, used in the measurement of NOx concentration is introduced into the reference-gas-introducing space 43.

An atmospheric-air-introducing layer 48 is made of porous alumina and is exposed to the reference-gas-introducing space 43. The reference gas is introduced into the atmospheric-air-introducing layer 48 through the reference-gas-introducing space 43. The atmospheric-air-introducing layer 48 is provided over a reference electrode 42. The atmospheric-air-introducing layer 48 introduces the reference gas into the reference electrode 42 while applying a predetermined diffusion resistance to the reference gas in the reference-gas-introducing space 43. The atmospheric-air-introducing layer 48 is provided such that only a side thereof nearer to the other end (on the right side in Fig. 1) of the sensor element 101 than the reference electrode 42 is exposed to the reference-gas-introducing space 43. Therefore, for example, the path along which the reference gas flows from the reference-gas-introducing space 43 to the reference electrode 42 is longer and it is easier to apply a predetermined high diffusion resistance to the reference gas via the atmospheric-air-introducing layer 48 than in a case where the reference-gas-introducing space 43 is formed up to a position immediately above the reference electrode 42 in Fig. 1. As the diffusion resistance applied to the reference gas becomes higher, the amount of oxygen in the reference gas that reaches the reference electrode 42 becomes smaller. Therefore, in the measurement of oxygen concentration (oxygen partial pressure) in the measurement-object-gas-flowing portion that is performed by using the reference electrode 42, the application of the predetermined high diffusion resistance makes it easier to detect slight changes in the oxygen concentration in the measurement-object-gas-flowing portion. Accordingly, the sensitivity of the detection can be increased. Furthermore, for example, in the case where the reference-gas-introducing space 43 is formed up to a position immediately above the reference electrode 42 in Fig. 1, the reference electrode 42 is liable to be poisoned by the reference gas. In the embodiment, however, such a phenomenon can be prevented. Nevertheless, the reference electrode 42 may be provided immediately below the reference-gas-introducing space 43 in Fig. 1. In that case, however, the above advantageous effect cannot be produced.

The reference electrode 42 is held between the upper surface of the third substrate layer 3 and the first solid-electrolyte layer 4. As described above, the reference electrode 42 is enclosed by the atmospheric-air-introducing layer 48 that communicates with the reference-gas-introducing space 43. The reference electrode 42 is provided directly on the upper surface of the third substrate layer 3, and all portions of the reference electrode 42 but a portion that is in contact with the upper surface of the third substrate layer 3 are covered with the atmospheric-air-introducing layer 48. Furthermore, as to be described below, the oxygen concentration (oxygen partial pressure) in each of the first internal cavity 20, the second internal cavity 40, and the third internal cavity 61 is measurable by using the reference electrode 42.

The gas inlet 10 in the measurement-object-gas-flowing portion is open to the external space. The measurement-object gas is taken into the sensor element 101 from the external space through the gas inlet 10. The first diffusion-controlling portion 11 applies a predetermined diffusion resistance to the measurement-object gas taken from the gas inlet 10. The buffer space 12 is provided for introducing, into the second diffusion-controlling portion 13, the measurement-object gas introduced from the first diffusion-controlling portion 11. The second diffusion-controlling portion 13 applies a predetermined diffusion resistance to the measurement-object gas introduced from the buffer space 12 into the first internal cavity 20. When the measurement-object gas is introduced from the outside of the sensor element 101 into the first internal cavity 20, the measurement-object gas that has been abruptly taken into the sensor element 101 from the gas inlet 10 because of a change in the pressure of the measurement-object gas in the external space (the pulsation of the exhaust-gas pressure if the measurement-object gas is the exhaust gas from an automobile) is not directly introduced into the first internal cavity 20 but is introduced into the first internal cavity 20 after changes in the concentration of the measurement-object gas are cancelled out while the measurement-object gas flows through the first diffusion-controlling portion 11, the buffer space 12, and the second diffusion-controlling portion 13. Hence, changes in the concentration of the measurement-object gas introduced into the first internal cavity 20 are almost negligible. The first internal cavity 20 is provided as a space for adjusting the partial pressure of oxygen in the measurement-object gas introduced thereinto through the second diffusion-controlling portion 13. The partial pressure of oxygen is adjusted with the activation of a main-pump cell 21.

The main-pump cell 21 is an electrochemical pump cell that includes an inner pump electrode 22 including a ceiling electrode portion 22a provided substantially over the entirety of a portion of the lower surface of the second solid-electrolyte layer 6 that faces the first internal cavity 20, an outer pump electrode 23 exposed to the external space and provided over an area of the upper surface of the second solid-electrolyte layer 6 that corresponds to the ceiling electrode portion 22a, and a portion of the second solid-electrolyte layer 6 that is held between the foregoing electrodes.

The inner pump electrode 22 is provided over the upper and lower solid-electrolyte layers (the second solid-electrolyte layer 6 and the first solid-electrolyte layer 4) that define the first internal cavity 20, and the spacer layer 5 that defines sidewalls of the first internal cavity 20. Specifically, the ceiling electrode portion 22a is provided over a portion of the lower surface of the second solid-electrolyte layer 6 that forms the ceiling surface of the first internal cavity 20, and a bottom electrode portion 22b is provided directly over a portion of the upper surface of the first solid-electrolyte layer 4 that forms the bottom surface of the first internal cavity 20. Furthermore, side electrode portions (not illustrated) is provided over portions of respective sidewalls (inner surfaces) of the spacer layer 5 that forms the two respective sidewall portions of the first internal cavity 20. The side electrode portions connect the ceiling electrode portion 22a and the bottom electrode portion 22b to each other. Thus, the inner pump electrode 22 has a tunnel-like structure in a region where the side electrode portions are provided.

The inner pump electrode 22 and the outer pump electrode 23 are each a porous cermet electrode (for example, a Pt/ZrO₂ cermet electrode containing 1% of Au). The inner pump electrode 22 that is to be in contact with the measurement-object gas is made of a material having low capability of reducing a NOx component in the measurement-object gas.

In the main-pump cell 21, a desired pump voltage Vp0 is applied between the inner pump electrode 22 and the outer pump electrode 23, whereby a pump current Ip0 flows between the inner pump electrode 22 and the outer pump electrode 23 in the positive direction or in the negative direction. Thus, oxygen in the first internal cavity 20 can be pumped out to the external space, or oxygen in the external space can be pumped into the first internal cavity 20.

To detect the oxygen concentration (oxygen partial pressure) of the atmosphere in the first internal cavity 20, an electrochemical sensor cell, i.e., a main-pump-controlling oxygen-partial-pressure-detecting sensor cell 80, is provided as a combination of the inner pump electrode 22, the second solid-electrolyte layer 6, the spacer layer 5, the first solid-electrolyte layer 4, and the reference electrode 42.

The oxygen concentration (oxygen partial pressure) in the first internal cavity 20 can be known by measuring an electromotive force V0 in the main-pump-controlling oxygen-partial-pressure-detecting sensor cell 80. Furthermore, the pump voltage Vp0 generated by a variable power supply 25 is controlled by a feedback method such that the electromotive force V0 becomes constant, whereby the pump current Ip0 is controlled. Thus, the oxygen concentration in the first internal cavity 20 can be maintained at a predetermined constant level.

The third diffusion-controlling portion 30 applies a predetermined diffusion resistance to the measurement-object gas whose oxygen concentration (oxygen partial pressure) has been controlled in the first internal cavity 20 with the activation of the main-pump cell 21, and guides the measurement-object gas into the second internal cavity 40.

The second internal cavity 40 is a space for further adjusting, by an auxiliary-pump cell 50, the oxygen partial pressure of the measurement-object gas that has undergone the adjustment of its oxygen concentration (oxygen partial pressure) in the first internal cavity 20 in advance and has been introduced into the second internal cavity 40 through the third diffusion-controlling portion 30. Hence, the oxygen concentration in the second internal cavity 40 can be maintained at a constant level with high accuracy. Therefore, the gas sensor 100 is capable of performing a highly accurate measurement of NOx concentration.

The auxiliary-pump cell 50 is an auxiliary electrochemical pump cell that includes an auxiliary-pump electrode 51, the outer pump electrode 23 (not limited to the outer pump electrode 23 but any suitable electrode provided on the outer side of the sensor element 101 will do), and the second solid-electrolyte layer 6. The auxiliary-pump electrode 51 includes a ceiling electrode portion 51a provided substantially over the entirety of a portion of the lower surface of the second solid-electrolyte layer 6 that faces the second internal cavity 40.

The auxiliary-pump electrode 51 has a tunnel-like structure, as with the inner pump electrode 22 provided in the first internal cavity 20, and is provided in the second internal cavity 40. Specifically, the auxiliary-pump electrode 51 has a tunnel-like structure in which the ceiling electrode portion 51a is provided over a portion of the second solid-electrolyte layer 6 that forms the ceiling surface of the second internal cavity 40, a bottom electrode portion 51b is provided directly over a portion of the upper surface of the first solid-electrolyte layer 4 that forms the bottom surface of the second internal cavity 40, and side electrode portions (not illustrated) connecting the ceiling electrode portion 51a and the bottom electrode portion 51b are provided over portions of the two respective sidewalls of the spacer layer 5 that form the sidewalls of the second internal cavity 40. As with the inner pump electrode 22, the auxiliary-pump electrode 51 is made of a material having low capability of reducing a NOx component in the measurement-object gas.

In the auxiliary-pump cell 50, a desired voltage Vp1 is applied between the auxiliary-pump electrode 51 and the outer pump electrode 23. Thus, oxygen contained in the atmosphere in the second internal cavity 40 can be pumped out to the external space, or oxygen in the external space can be pumped into the second internal cavity 40.

To control the oxygen partial pressure of the atmosphere in the second internal cavity 40, an electrochemical sensor cell, i.e., an auxiliary-pump-controlling oxygen-partial-pressure-detecting sensor cell 81, is provided as a combination of the auxiliary-pump electrode 51, the reference electrode 42, the second solid-electrolyte layer 6, the spacer layer 5, and the first solid-electrolyte layer 4.

A variable power supply 52 whose voltage is controlled on the basis of an electromotive force V1 detected by the auxiliary-pump-controlling oxygen-partial-pressure-detecting sensor cell 81 causes the auxiliary-pump cell 50 to perform pumping. Thus, the oxygen partial pressure of the atmosphere in the second internal cavity 40 is controlled to be a small value at which the measurement of NOx is not substantially affected.

Furthermore, a pump current Ip1 is used for controlling the electromotive force generated by the main-pump-controlling oxygen-partial-pressure-detecting sensor cell 80. Specifically, the pump current Ip1 is inputted as a control signal to the main-pump-controlling oxygen-partial-pressure-detecting sensor cell 80, and its electromotive force V0 is controlled, whereby the gradient of partial pressure of oxygen in the measurement-object gas introduced from the third diffusion-controlling portion 30 into the second internal cavity 40 is controlled to be constant. If the gas sensor 100 is used as a NOx sensor, the oxygen concentration in the second internal cavity 40 is maintained to be constant at about 0.001 ppm with the activation of the main-pump cell 21 and the auxiliary-pump cell 50.

The fourth diffusion-controlling portion 60 applies a predetermined diffusion resistance to the measurement-object gas whose oxygen concentration (oxygen partial pressure) has been controlled with the activation of the auxiliary-pump cell 50 in the second internal cavity 40, and guides the measurement-object gas into the third internal cavity 61. The fourth diffusion-controlling portion 60 is responsible for limiting the amount of NOx flowing into the third internal cavity 61.

The third internal cavity 61 is a space for performing a treatment concerning the measurement of the concentration of nitrogen oxide (NOx) in the measurement-object gas whose oxygen concentration (oxygen partial pressure) has been adjusted in advance in the second internal cavity 40 and that has been introduced into the third internal cavity 61 through the fourth diffusion-controlling portion 60. The measurement of NOx concentration is basically performed in the third internal cavity 61 with the activation of a measurement pump cell 41.

The measurement pump cell 41 measures the concentration of NOx in the measurement-object gas in the third internal cavity 61. The measurement pump cell 41 is an electrochemical pump cell including a measuring electrode 44, the outer pump electrode 23, the second solid-electrolyte layer 6, the spacer layer 5, and the first solid-electrolyte layer 4. The measuring electrode 44 is provided directly on a portion of the upper surface of the first solid-electrolyte layer 4 that faces the third internal cavity 61. The measuring electrode 44 is a porous cermet electrode. The measuring electrode 44 also functions as a NOx-reduction catalyst that reduces NOx in the atmosphere in the third internal cavity 61.

In the measurement pump cell 41, oxygen generated by the decomposition of nitrogen oxide in the atmosphere around the measuring electrode 44 can be pumped out, and the amount of oxygen thus generated can be detected as a pump current Ip2.

To detect the oxygen partial pressure around the measuring electrode 44, an electrochemical sensor cell, i.e., a measurement-pump-controlling oxygen-partial-pressure-detecting sensor cell 82, is provided as a combination of the first solid-electrolyte layer 4, the measuring electrode 44, and the reference electrode 42. A variable power supply 46 is controlled on the basis of an electromotive force V2 detected by the measurement-pump-controlling oxygen-partial-pressure-detecting sensor cell 82.

The measurement-objet gas that has been introduced into the second internal cavity 40 and whose oxygen partial pressure has been controlled flows through the fourth diffusion-controlling portion 45 and reaches the measuring electrode 44 in the third internal cavity 61. Nitrogen oxide in the measurement-object gas that is present around the measuring electrode 44 is reduced (2NO → N₂ + O₂) and generates oxygen. The oxygen thus generated is subjected to pumping performed by the measurement pump cell 41. In this pumping, a voltage Vp2 of the variable power supply 46 is controlled such that the control voltage V2 detected by the measurement-pump-controlling oxygen-partial-pressure-detecting sensor cell 82 becomes constant. The amount of oxygen generated around the measuring electrode 44 is proportional to the concentration of nitrogen oxide in the measurement-object gas. Therefore, the concentration of nitrogen oxide in the measurement-object gas is calculated using the pump current Ip2 flowing in the measurement pump cell 41.

If the measuring electrode 44, the first solid-electrolyte layer 4, the third substrate layer 3, and the reference electrode 42 are combined together into an electrochemical sensor cell functioning as oxygen-partial-pressure-detecting device, an electromotive force corresponding to the difference between the amount of oxygen generated by the reduction of the NOx component in the atmosphere around the measuring electrode 44 and the amount of oxygen in the reference atmospheric air can be detected. Accordingly, the concentration of the NOx component in the measurement-object gas can also be calculated.

Furthermore, a combination of the second solid-electrolyte layer 6, the spacer layer 5, the first solid-electrolyte layer 4, the outer pump electrode 23, and the reference electrode 42 forms an electrochemical sensor cell 83. The partial pressure of oxygen in the measurement-object gas that is present on the outside of the sensor can be detected on the basis of an electromotive force Vref generated by the sensor cell 83.

In the gas sensor 100 configured as described above, when the main-pump cell 21 and the auxiliary-pump cell 50 are activated, a measurement-object gas whose oxygen partial pressure is maintained at a constant low level (a value that does not substantially affect the measurement of NOx) is supplied to the measurement pump cell 41. Hence, it is possible to know the concentration of NOx in the measurement-object gas based on the pump current Ip2 that flows when oxygen generated by the reduction of NOx substantially proportionally to the concentration of NOx in the measurement-object gas is pumped out of the measurement pump cell 41.

The sensor element 101 further includes a heater portion 70 that controls the temperature of the sensor element 101 by heating the sensor element 101 and maintains the temperature so that the oxygen-ion conductivity of the solid electrolyte is increased. The heater portion 70 includes a heater electrode 71, a heater 72, a through hole 73, a heater-insulating layer 74, a pressure-releasing hole 75, and a lead wire 76.

The heater electrode 71 is provided in contact with the lower surface of the first substrate layer 1. Connecting the heater electrode 71 to an external power supply allows power to be fed to the heater portion 70 from the outside.

The heater 72 is an electrical resistor that is held between the second substrate layer 2 and the third substrate layer 3 from below and from above, respectively. The heater 72 is connected to the heater electrode 71 via the lead wire 76 and the through hole 73 and generates heat by receiving power from the outside via the heater electrode 71. Thus, the heater 72 heats the solid electrolyte forming the sensor element 101 and maintain the temperature of the solid electrolyte.

The heater 72 is embedded below and provided over the entirety of a region from the first internal cavity 20 to the third internal cavity 61. Hence, the heater 72 is capable of controlling the temperature of the entirety of the sensor element 101 to a temperature at which the solid electrolyte is activated.

The heater-insulating layer 74 is an insulating layer covering the upper and lower surfaces of the heater 72 and made of porous alumina. The porous alumina is an insulator made of alumina or the like. The heater-insulating layer 74 is provided for the purpose of providing electrical insulation between the second substrate layer 2 and the heater 72 and between the third substrate layer 3 and the heater 72.

The pressure-releasing hole 75 is provided through the third substrate layer 3 and communicates with the reference-gas-introducing space 43. The pressure-releasing hole 75 is provided for the purpose of reducing the increase in the internal pressure that may occur with a rise of the temperature in the heater-insulating layer 74.

The sensor element 101 further includes a blocking portion 65. The blocking portion 65 includes an inner blocking layer 66 provided in the third internal cavity 61, and an outer blocking layer 67 provided on the upper surface, in Fig. 1, of the second solid-electrolyte layer 6.

The inner blocking layer 66 and the outer blocking layer 67 suppress the migration of oxygen ions in the multilayer structure (the second solid-electrolyte layer 6) from occurring without the intervention of any electrodes such as the outer pump electrode 23 and the measuring electrode 44. The inner blocking layer 66 and the outer blocking layer 67 do not conduct one or more kinds of substances that contain oxygen. For example, the inner blocking layer 66 and the outer blocking layer 67 are made of alumina, silica, mullite, silicon nitride, silicon carbide. Examples of "substances that contain oxygen" include molecules that contain oxygen (O) in their chemical formulae, such as O₂, CO, CO₂, NOx, and H₂O; and ions that contain oxygen (O) in their chemical formulae. Examples of "ions that contain oxygen" include oxygen ions (also referred to as oxide ions) such as O²⁻ and O⁻. The inner blocking layer 66 and the outer blocking layer 67 enhance the effect of suppressing the occurrence of electrode-less migration of oxygen ions. Therefore, it is preferable that the inner blocking layer 66 and the outer blocking layer 67 each have as small porosity as possible and as large thickness as possible. Specifically, the porosity of the blocking portion 65 is 5% or lower. The thickness of each of the inner blocking layer 66 and the outer blocking layer 67 is preferably 1 µm to 30 µm. By setting the thickness to 1 µm or larger, the effect of suppressing the electrode-less migration of oxygen ions is more assuredly produced. Furthermore, by setting the thickness to 30 µm or smaller, the inner blocking layer 66 and the outer blocking layer 67 can be relatively easily formed on the solid-electrolyte layers. The inner blocking layer 66 and the outer blocking layer 67 may be made of the same material or different materials. Moreover, the porosities, the thicknesses, and other factors of the inner blocking layer 66 and the outer blocking layer 67 may be the same or different.

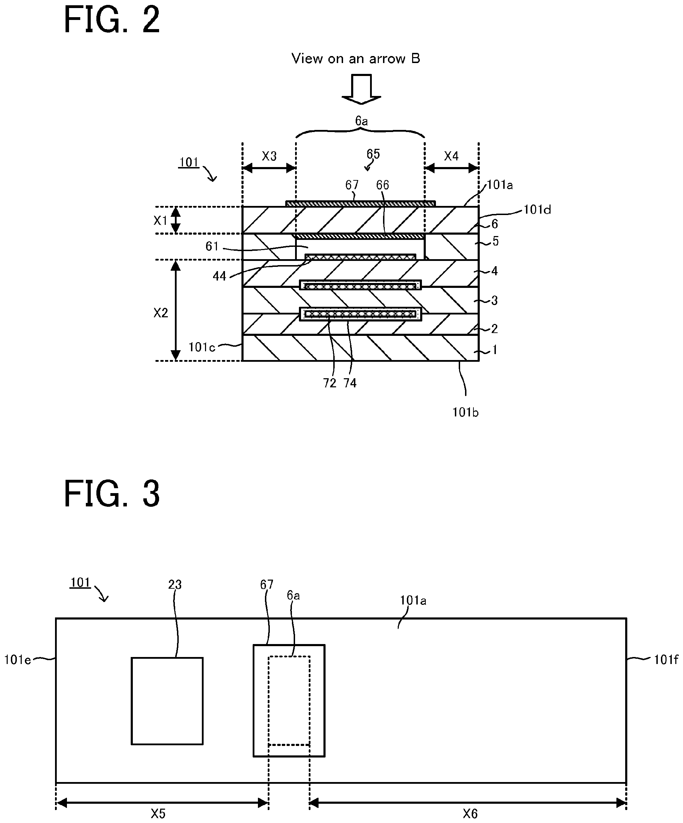

The positions where the inner blocking layer 66 and the outer blocking layer 67 are provided will now be described in detail. Fig. 2 is a sectional view taken along a line A-A illustrated in Fig. 1. Fig. 3 is a view seen in a direction B illustrated in Fig. 2. The inner blocking layer 66 is formed to cover at least part of an exposed portion where the solid-electrolyte layers (the first and second solid-electrolyte layers 4 and 6 and the spacer layer 5) are exposed as the inner surfaces of the third internal cavity 61. The outer blocking layer 67 is provided on the upper one, in Fig. 1, of the outer surfaces of the second solid-electrolyte layer 6 in such a manner as to be positioned opposite the inner blocking layer 66.

The outer blocking layer 67 covers the entirety of a nearest portion 6a of the second solid-electrolyte layer 6 and also covers areas around the nearest portion 6a. The nearest portion 6a is at the shortest distance from the third internal cavity 61 among portions of the outer surfaces of the sensor element 101 where the solid-electrolyte layers are exposed. The sensor element 101 is a rectangular parallelepiped and has six outer surfaces: namely, a first surface 101a (the upper surface in Fig. 2), a second surface 101b (the lower surface in Fig. 2), a third surface 101c (the left side surface in Fig. 2), a fourth surface 101d (the right side surface in Fig. 2), a fifth surface 101e (the left end surface in Fig. 3), and a sixth surface 101f (the right end surface in Fig. 3). In the embodiment, letting the distances from the third internal cavity 61 to the first to sixth surfaces 101a to 101f be distances X1 to X6, respectively, the distance X1 from the third internal cavity 61 to the first surface 101a is the shortest. Hence, a portion of the first surface 101a in which the distance to the third internal cavity 61 is shortest is defined as the nearest portion 6a, and the outer blocking layer 67 is provided to cover the nearest portion 6a. It can also be said that the nearest portion 6a is a projection of the third internal cavity 61 that is projected perpendicularly onto the first surface 101a.

The inner blocking layer 66 covers substantially the entirety of a portion of the inner surfaces of the third internal cavity 61 that is opposite the nearest portion 6a (i.e., a portion of the lower surface of the second solid-electrolyte layer 6 that forms the ceiling surface of the third internal cavity 61). In other words, the projection of the inner blocking layer 66 that is projected perpendicularly onto the first surface 101a substantially coincides with the nearest portion 6a.

The blocking portion 65 is provided such that an area ratio A/B of a covered area A by which the blocking portion 65 covers the solid-electrolyte layers to an exposed area B by which the solid-electrolyte layers are exposed as the inner surfaces of the third internal cavity 61 is 0.3 or greater. The covered area A by which the blocking portion 65 covers the solid-electrolyte layers is the sum of an area by which the inner blocking layer 66 covers the solid-electrolyte layers and an area by which the outer blocking layer 67 covers the solid-electrolyte layers. The exposed area B includes the area of a portion covered with the inner blocking layer 66. That is, the exposed area B is an area of portions of the solid-electrolyte layers that are exposed as the inner surfaces of the third internal cavity 61, when the inner blocking layer 66 ignored. In the embodiment, the inner blocking layer 66 and the measuring electrode 44 are provided in the third internal cavity 61. Therefore, the total area of portions of the inner surfaces (six surfaces) of the third internal cavity 61 that are not covered with the measuring electrode 44 corresponds to the exposed area B. As the area ratio A/B becomes greater, the effect of suppressing the electrode-less migration of oxygen ions is enhanced. The area ratio A/B is more preferably 0.5 or greater. The area by which the inner blocking layer 66 covers the solid-electrolyte layers is preferably larger than or equal to the area by which the measuring electrode 44 covers the solid-electrolyte layers. Likewise, the area by which the outer blocking layer 67 covers the solid-electrolyte layers is preferably larger than or equal to the area by which the measuring electrode 44 covers the solid-electrolyte layers. If the area by which the inner blocking layer 66 or the outer blocking layer 67 covers the solid-electrolyte layers is set to a value larger than or equal to the area by which the measuring electrode 44 covers the solid-electrolyte layers, the effect of suppressing the electrode-less migration of oxygen ions tends to be exerted satisfactorily.

An exemplary method of manufacturing the above sensor element 101 of the gas sensor 100 will now be described. First, six unfired ceramic green sheets each containing, as a ceramic component, an oxygen-ion-conductive solid electrolyte, such as zirconia, are prepared. The green sheets are provided in advance with sheet holes used in the positioning of the sheets to be performed in the printing and stacking processes, and other necessary through holes and the like. One of the green sheets that is to become the spacer layer 5 is provided in advance with a space that is to become the measurement-object-gas-flowing portion by punching or the like. Another one of the green sheets that is to become the first solid-electrolyte layer 4 is also provided in advance with a space that is to become the reference-gas-introducing space 43. Then, pattern printing and drying are performed in which various patterns corresponding to the first substrate layer 1, the second substrate layer 2, the third substrate layer 3, the first solid-electrolyte layer 4, the spacer layer 5, and the second solid-electrolyte layer 6 are formed on the ceramic green sheets, respectively. The patterns to be formed correspond to, specifically, the patterns that have been described above, such as the electrodes, the lead wires, the atmospheric-air-introducing layer 48, the heater portion 70, and the blocking portion 65. In the pattern printing, pattern-forming pastes prepared in accordance with the characteristics required for the individual elements are applied to the green sheets by known screen-printing techniques. The drying is performed by using known drying device. After the pattern printing and the drying are finished, bonding pastes for stacking and bonding the green sheets corresponding to the respective layers are applied to the green sheets by printing and are dried. Subsequently, the green sheets now having the bonding pastes are stacked in a predetermined order while being positioned with respect to one another with reference to the sheet holes, and compression boding is performed in which the green sheets are compressed at a predetermined temperature and a predetermined pressure, whereby the green sheets are formed into a single multilayer structure. The multilayer structure thus obtained includes to a plurality of sensor elements 101. The multilayer structure is cut into pieces each having the size of a single sensor element 101. The cut pieces of the multilayer structure are fired at a predetermined baking temperature, whereby sensor elements 101 are obtained. Each of the sensor elements 101 thus obtained is put into a predetermined housing and is incorporated into the body (not illustrated) of the gas sensor 100. Thus, the gas sensor 100 is obtained.

In the gas sensor 100 described above, the inner blocking layer 66 and the outer blocking layer 67 of the sensor element 101 each do not conduct one or more kinds of substances that contain oxygen. Therefore, the migration of oxygen ions is suppressed in portions of the surfaces of the multilayer structure that are covered with the inner blocking layer 66 and the outer blocking layer 67. For example, if the outer blocking layer 67 does not conduct oxygen ions, the migration of oxygen ions between the outside and the inside of the multilayer structure is suppressed in any portions of the surfaces of the multilayer structure that are covered with the outer blocking layer 67. If the inner blocking layer 66 does not conduct oxygen ions, the migration of oxygen ions between the third internal cavity 61 and the inside of the multilayer structure is suppressed in any portions of the surfaces of the multilayer structure that are covered with the inner blocking layer 66. This does not only apply to the case where the inner blocking layer 66 or the outer blocking layer 67 does not conduct oxygen ions. The effect of suppressing the migration of oxygen ions is also produced as long as the inner blocking layer 66 or the outer blocking layer 67 does not conduct one or more kinds of substances that contain oxygen. If a substance containing oxygen, other than oxygen ions, reaches a surface of the multilayer structure, the substance may generate oxygen ions. Such a phenomenon can be suppressed by the above configuration. Thus, the presence of the inner blocking layer 66 and the outer blocking layer 67 suppresses the migration of oxygen ions between the third internal cavity 61 and the outside of the multilayer structure from occurring without the intervention of any electrodes such as the measuring electrode 44 and the outer pump electrode 23.

The correspondence between the elements according to the embodiment and the elements according to the present invention will now be clarified. A combination of the first substrate layer 1, the second substrate layer 2, the third substrate layer 3, the first solid-electrolyte layer 4, the spacer layer 5, and the second solid-electrolyte layer 6 according to the embodiment corresponds to the multilayer structure according to the present invention. The measuring electrode 44 corresponds to the measuring electrode. The third internal cavity 61 corresponds to the space in which the measuring-electrode is set. The outer pump electrode 23 corresponds to each of the outer electrode, the outer main-pump electrode, and the outer auxiliary-pump electrode. The measurement pump cell 41 corresponds to the detecting device. The blocking portion 65 including the inner blocking layer 66 and the outer blocking layer 67 corresponds to the blocking portion. The reference electrode 42 corresponds to the reference electrode. The inner pump electrode 22 corresponds to the inner main-pump electrode. The main-pump cell 21 corresponds to the main-pump cell. The auxiliary-pump electrode 51 corresponds to the inner auxiliary-pump electrode. The auxiliary-pump cell 50 corresponds to the auxiliary-pump cell. In the embodiment, an example of the gas sensor according to the present invention is also clarified by describing the gas sensor 100 including the sensor element 101.

The sensor element 101 according to the embodiment described in detail above includes the blocking portion 65. The blocking portion 65 includes the inner blocking layer 66 that covers at least part of the exposed portion where the solid-electrolyte layers are exposed as the inner surfaces of the third internal cavity 61, and the outer blocking layer 67 that covers at least part of the nearest portion 6a that is at the shortest distance from the third internal cavity 61 among portions of the outer surfaces of the multilayer structure where the solid-electrolyte layers are exposed. The inner blocking layer 66 and the outer blocking layer 67 do not each conduct one or more kinds of substances that contain oxygen. Hence, the migration of oxygen ions is suppressed in part of the exposed portions of the solid-electrolyte layers that is covered with the blocking portion 65. That is, the migration of oxygen ions between the third internal cavity 61 and the outside of the multilayer structure can be suppressed from occurring without the intervention of any electrodes such as the measuring electrode 44 and the outer pump electrode 23. If such electrode-less migration of oxygen ions occurs, noise based on the migration is generated in the pump current Ip2, for example. As described above, the gas sensor 100 is capable of detecting the NOx concentration of the measurement-object gas on the basis of the pump current Ip2. However, such a pump current Ip2 that includes noise does not represent the NOx concentration correctly, and the detection accuracy is lowered. In the gas sensor 100 according to the embodiment, the blocking portion 65 suppresses the electrode-less migration of oxygen ions, whereby the influence upon the pump current Ip2 is suppressed. Consequently, the accuracy in the detection of NOx concentration of the measurement-object gas is further improved. The electrode-less migration of oxygen ions between the third internal cavity 61 and the outside of the sensor element 101 is more likely to occur as the distance between the third internal cavity 61 and the outside of the multilayer structure becomes shorter. In the gas sensor 100 according to the embodiment, since the outer blocking layer 67 is provided over at least part of the nearest portion 6a that is at the shortest distance from the third internal cavity 61 among portions of the outer surfaces of the multilayer structure where the solid-electrolyte layers are exposed, the electrode-less migration of oxygen ions can be suppressed more assuredly.

Since the outer blocking layer 67 covers the entirety of the nearest portion 6a, the effect of the outer blocking layer 67 suppressing the electrode-less migration of oxygen ions is further enhanced.

The area ratio A/B of the covered area A by which the blocking portion 65 covers the solid-electrolyte layers to the exposed area B by which the solid-electrolyte layers are exposed as the inner surfaces of the third internal cavity 61 is 0.3 or greater. Therefore, the electrode-less migration of oxygen ions can be further suppressed.

Since the porosity of the blocking portion 65 is 5% or lower, the electrode-less migration of oxygen ions can be further suppressed.

The inner blocking layer 66 covers the entirety of a portion of the inner surfaces of the third internal cavity 61 that is opposite the nearest portion 6a (the inner surface that is across the second solid-electrolyte layer 6 from the nearest portion 6a). As described above, the electrode-less migration of oxygen ions is more likely to occur as the distance between the third internal cavity 61 and the outside of the multilayer structure becomes shorter. Therefore, covering the portion that is opposite the nearest portion 6a with the inner blocking layer can further suppress the electrode-less migration of oxygen ions.

The blocking portion 65 includes both the inner blocking layer 66 and the outer blocking layer 67. Therefore, the effect of suppressing the electrode-less migration of oxygen ions is higher than in a case where the blocking portion 65 only includes one of the two.

The measurement-object-gas-flowing portion includes the first internal cavity 20, the second internal cavity 40, and the third internal cavity 61. When the measurement-object gas flows through the first internal cavity, the main-pump cell 21 adjusts the concentration of oxygen in the measurement-object gas to a predetermined main-pump target concentration. Furthermore, when the measurement-object gas flows through the second internal cavity, the auxiliary-pump cell 50 adjusts the concentration of oxygen in the measurement-object gas to a predetermined auxiliary-pump target concentration. Therefore, the concentration of oxygen in the measurement-object gas that reaches the third internal cavity 61 can be maintained at a constant level with high accuracy. Consequently, the accuracy in the detection of concentration of the specific gas in the measurement-object gas can be further improved.

The present invention is not limited to the above-described embodiment. It is clear that the present invention can be implemented in a variety of embodiments without departing from the technical scope thereof.

For example, while the above embodiment concerns a case where the blocking portion 65 includes both the inner blocking layer 66 and the outer blocking layer 67, the blocking portion 65 may include only one of the two. In the latter case also, the electrode-less migration of oxygen ions can be suppressed by using one of the inner blocking layer 66 and the outer blocking layer 67.

In the above embodiment, the inner blocking layer 66 covers the entirety of a portion of the inner surfaces of the third internal cavity 61 that is opposite the nearest portion 6a. Alternatively, the inner blocking layer 66 may cover at least part of the inner surface that is opposite the nearest portion 6a. The inner blocking layer 66 may also cover the inner surfaces of the third internal cavity 61 excluding the one that is opposite the nearest portion 6a. Alternatively, the inner blocking layer 66 may cover only the inner surfaces of the third internal cavity 61 excluding the one that is opposite the nearest portion 6a. Note that, to enhance the effect of suppressing the electrode-less migration of oxygen ions, it is preferable that the inner blocking layer 66 covers at least part of the inner surface that is opposite the nearest portion 6a. The inner blocking layer 66 does not need to cover portions where the solid-electrolyte layers are not exposed as the inner surfaces of the third internal cavity 61. For example, if a portion of the inner surfaces of the third internal cavity 61 that is opposite the nearest portion 6a includes any portions where the solid-electrolyte layer is not exposed, the inner blocking layer 66 only needs to cover part of or the entirety of the inner surface that is opposite the nearest portion 6a excluding such portions. Particularly, it is preferable not to cover portions where any electrodes such as the measuring electrode 44 are provided. Likewise, the outer blocking layer 67 does not need to cover portions where the solid-electrolyte layers are not exposed. It is preferable not to cover portions where any electrodes such as the outer pump electrode 23 are provided.

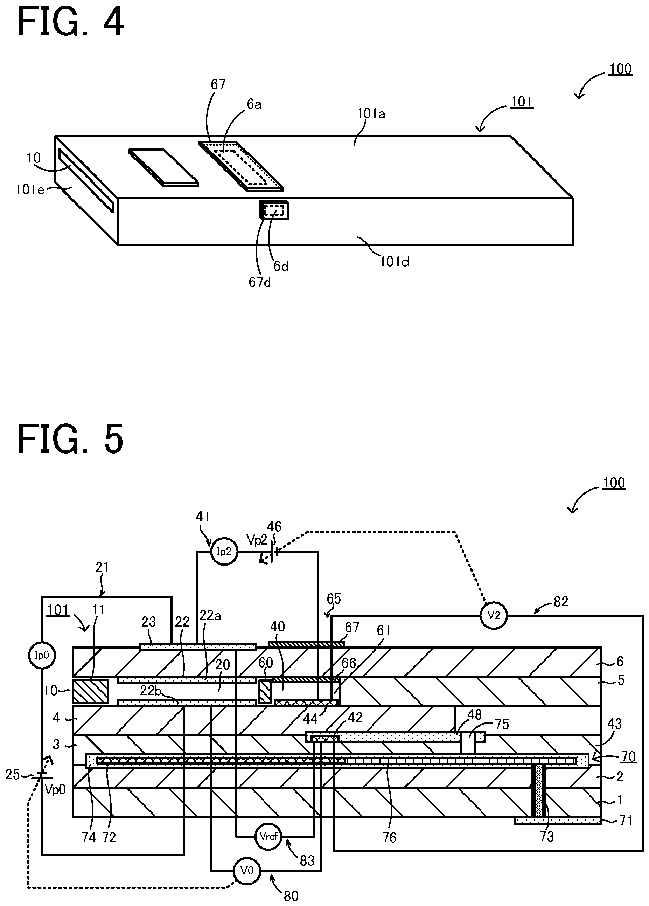

In the above embodiment, the outer blocking layer 67 covers the entirety of the nearest portion 6a and areas around the nearest portion 6a. The present invention is not limited to such a case. For example, another outer blocking layer that covers a portion of the first surface 101a that is spaced apart from the outer blocking layer 67 illustrated in Figs. 1 to 3 may be provided. Alternatively, the outer blocking layer 67 may cover only the entirety of or at least part of the nearest portion 6a. However, to enhance the effect of suppressing the electrode-less migration of oxygen ions, it is preferable that the outer blocking layer 67 cover the entirety of the nearest portion 6a. The outer blocking layer 67 may also cover one or more surfaces excluding the first surface 101a having the nearest portion 6a. Fig. 4 is a perspective view of a gas sensor 100 according to a modification. In Fig. 4, an outer blocking layer 67d that covers a portion of the fourth surface 101d is provided in addition to the outer blocking layer 67 described above. Thus, as the area by which the outer blocking layer 67 covers the exposed portions of the solid-electrolyte layers increases, the effect of suppressing the electrode-less migration of oxygen ions is enhanced. As illustrated in Fig. 4, the outer blocking layer 67d covers the entirety of a projection area 6d defined as a projection of the third internal cavity 61 that is projected perpendicularly onto the fourth surface 101d, and also covers areas around the projection area 6d. If any outer blocking layers are also provided on any outer surfaces excluding the one (the first surface 101a) having the nearest portion 6a, it is preferable that the other blocking layers cover all projection areas (the nearest portion 6a and the projection area 6d in the case illustrated in Fig. 4) defined as projections of the third internal cavity 61 that are projected perpendicularly onto the respective outer surfaces (the first surface 101a and the fourth surface 101d in the case illustrated in Fig. 4) having the outer blocking layers. Thus, in each of the outer surfaces having the outer blocking layers, the area (the projection area) of the outer surface that is at the shortest distance from the third internal cavity 61 can be covered. Consequently, the effect of suppressing the electrode-less migration of oxygen ions can be further enhanced.

In the above embodiment, the distance X1 is the shortest of all of the distances X1 to X6 illustrated in Figs. 2 and 3. The present invention is not limited to such a case. For example, the distance X4 may be the shortest. In that case, the projection area 6d illustrated in Fig. 4 corresponds to the nearest portion. Hence, the outer blocking layer only needs to cover at least part of the projection area 6d. If, for example, the distance X3 and the distance X4 are equal to each other and are both the shortest of all of the distances X1 to X6, the projection area defined as a projection of the third internal cavity 61 that is projected perpendicularly onto the third surface 101c and the projection area 6d each correspond to the nearest portion. Therefore, the outer blocking layers only need to cover at least part of at least one of the nearest portions. As described above, the term "nearest portion" refers to a portion that is at the shortest distance from the third internal cavity 61 among portions of the outer surfaces of the sensor element 101 "where the solid-electrolyte layers are exposed." Hence, for example, if an electrode is provided at the same position as the outer blocking layer 67 illustrated in Figs. 2 and 3, a portion of the first surface 101a that is covered with that electrode does not correspond to a portion "where the solid-electrolyte layers are exposed." That is, that portion does not correspond to the nearest portion. In such a case, if the distance between the third internal cavity 61 and a portion around the electrode where the solid-electrolyte layers are exposed is shorter than the distances X2 to X6, that exposed portion around the electrode corresponds to the nearest portion. Any portions, such as the gas inlet 10, where no solid-electrolyte layers are present on the surfaces thereof do not each correspond to the nearest portion, either.

In the above embodiment, the main-pump cell 21 includes the outer pump electrode 23, the inner pump electrode 22, and the second solid-electrolyte layer 6. Alternatively, the outer pump electrode 23 may be replaced with another electrode (an outer main-pump electrode) provided on the outer side of the sensor element 101. Likewise, the auxiliary-pump cell 50 including the auxiliary-pump electrode 51, the outer pump electrode 23, and the second solid-electrolyte layer 6 may include another electrode (hereinafter referred to as outer auxiliary-pump electrode) provided on the outer side of the sensor element 101 in replacement with the outer pump electrode 23.

In the above embodiment, the inner pump electrode 22 is a tunnel-shaped electrode including the ceiling electrode portion 22a, the bottom electrode portion 22b, and the side electrode portions. The shape of the inner pump electrode 22 is not limited to such a tunnel-like shape. For example, the inner pump electrode 22 may include only the ceiling electrode portion 22a or only the bottom electrode portion 22b. Likewise, the shape of the auxiliary-pump electrode 51 is not limited to a tunnel-like shape.

In the above embodiment, the sensor element 101 of the gas sensor 100 is provided with the first internal cavity 20, the second internal cavity 40, and the third internal cavity 61. The present invention is not limited to such a case. For example, the sensor element 101 may be provided without the second internal cavity 40. Such a modification of the gas sensor 100 is illustrated in Fig. 5 in schematic sectional view. As illustrated in Fig. 5, in the gas sensor 100 according to this modification, the gas inlet 10, the first diffusion-controlling portion 11, the first internal cavity 20, the fourth diffusion-controlling portion 60, and the third internal cavity 61 are provided between the lower surface of the second solid-electrolyte layer 6 and the upper surface of the first solid-electrolyte layer 4 in such a manner as to communicate with one another and to be adjacent to one another in that order. Furthermore, unlike the above embodiment, the gas sensor 100 does not include the auxiliary-pump cell 50 and the auxiliary-pump-controlling oxygen-partial-pressure-detecting sensor cell 81. In the gas sensor 100 having such a configuration, when the main-pump cell 21 is activated, a measurement-object gas whose oxygen partial pressure is maintained to be constant at a low level (a level that does not substantially affect the measurement of NOx) is supplied to the measurement pump cell 41. Hence, it is possible to know the concentration of NOx in the measurement-object gas based on the pump current Ip2 that flows when oxygen generated by the reduction of NOx substantially proportionally to the concentration of NOx in the measurement-object gas is pumped out of the measurement pump cell 41. In the gas sensor having such a configuration also, since the blocking portion 65 is provided as in the above embodiment, the electrode-less migration of oxygen ions is suppressed by the blocking portion 65. Accordingly, as in the above embodiment, the influence upon the pump current Ip2 can be suppressed. Consequently, the accuracy in the detection of concentration of NOx in the measurement-object gas can be further improved.

The above embodiment concerns an exemplary case where the sensor element according to the present invention is embodied as the sensor element 101 including the variable power supplies 25, 46, and 52 and so forth. The sensor element according to the present invention may be embodied as the sensor element 101 alone, excluding the variable power supplies 25, 46, and 52 and other associated elements such as external wiring.

### EXAMPLES

### [EXAMPLE 1]

Ten sensor elements 101, each illustrated in Figs. 1 to 3, were manufactured by the above manufacturing method, and the sensor elements 101 were taken as Example 1. The inner blocking layer 66 and the outer blocking layer 67 according to Example 1 were each made of alumina and have a porosity of 5% and a thickness of 5 µm. The area by which the measuring electrode 44 covers the solid-electrolyte layers was set to 0.4 mm². The exposed area B by which the solid-electrolyte layers are exposed as the inner surfaces of the third internal cavity 61 was set to 1.4 mm². The area by which the inner blocking layer 66 covers the solid-electrolyte layers was set to 0.7 mm². The area by which the outer blocking layer 67 covers the solid-electrolyte layers was set to 0.4 mm². As a result, the covered area A by which the blocking portion 65 covers the solid-electrolyte layers was 1.1 mm², and the area ratio A/B was 0.8.

### [EXAMPLES 2 and 3 and COMPARATIVE EXAMPLE 1]

Ten sensor elements that were the same as those manufactured for Example 1 except that the blocking portion 65 included only the outer blocking layer 67 (area ratio A/B = 0.4/1.4 = 0.3) were manufactured, and the sensor elements were taken as Example 2. Ten sensor elements that were the same as those manufactured for Example 1 except that the blocking portion 65 included only the inner blocking layer 66 (area ratio A/B = 0.7/1.4 = 0.5) were manufactured, and the sensor elements were taken as Example 3. Ten sensor elements that were the same as those manufactured for Example 1 except that each of the sensor elements included no blocking portion 65 (area ratio A/B = 0) were manufactured, and the sensor elements were taken as

### Comparative Example 1.

### [EVALUATION TEST 1]

The sensor elements according to Examples 1 to 3 and Comparative Example 1 were put into a predetermined atmosphere (nitrogen concentration = 79%, oxygen concentration = 18%, NOx concentration = 0%, and moisture content = 3%) and were kept at a temperature (800°C) for normal operation by using a heater. Then, a NOx-signal offset value (the pump current Ip2 of the measurement pump cell 41) was measured. The measurement was performed for each of the ten elements in each of Examples 1 to 3 and Comparative Example 1. The maximum value, the minimum value, and the average value of the measured currents of the ten elements were obtained. The results are graphed in Fig. 6. As graphed in Fig. 6, Examples 1 to 3 each employing the blocking portion 65 tended to exhibit smaller NOx-signal offset values than in Comparative Example 1. Among Examples 1 to 3, Example 1 employing both the inner blocking layer 66 and the outer blocking layer 67 tended to exhibit the smallest NOx-signal offset value, and Examples 2 and 3 employing one of the outer blocking layer 67 and the inner blocking layer 66 tended to exhibit the next smallest NOx-signal offset values. The NOx-signal offset value in the atmospheric air is theoretically 0 µA. Higher values mean that the pump current Ip2 was generated because of a factor that is less relevant to the NOx concentration. In each of Examples 1 to 3, it is assumed that the presence of the blocking portion 65 suppressed the electrode-less migration of oxygen ions and thus made the NOx-signal offset value small.

### [COMPARATIVE EXAMPLE 2 AND EXAMPLES 4 AND 5]

Six sensor elements (area ratio A/B = 0) that were the same as those manufactured for Comparative Example 1 were manufactured, and the sensor elements were taken as Comparative Example 2. Six sensor elements (area ratio A/B = 0.5) that were the same as those manufactured for Example 3 were manufactured, and the sensor elements were taken as Example 4. Six sensor elements that were the same as those manufactured for Example 3 except that the area of the inner blocking layer 66 was set to 0.4 mm² (area ratio A/B = 0.4/1.4 = 0.3) were manufactured, and the sensor elements were taken as Example 5.

### [EVALUATION TEST 2]

The NOx-signal offset values were measured for each of the sensor elements according to Examples 4 and 5 and Comparative Example 2 under the same conditions as those set forth for Evaluation Test 1. The results are graphed in Fig. 7, together with the result of Example 1. As graphed in Fig. 7, the greater the area ratio A/B, the smaller the NOx-signal offset value. In each of Examples 1, 4, and 5 in which the area ratio A/B was 0.3 or greater, the NOx-signal offset value tended to be smaller than in Comparative Example 2. When the area ratio A/B was 0.5 or greater, the NOx-signal offset value tended to be much smaller.

### [EVALUATION TEST 3]

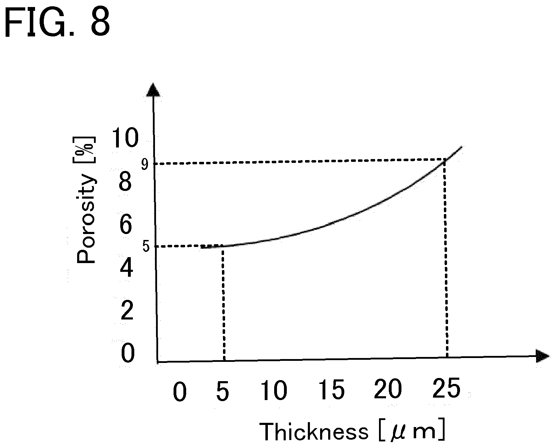

Using the sensor elements according to Example 2, NOx-signal offset values for different values of the thickness and the porosity of the blocking portion 65 (the outer blocking layer 67) were examined. The results are graphed in Fig. 8. The curve illustrated in Fig. 8 was obtained by plotting the values of the thickness and the porosity that made the NOx-signal offset value 0.03 µA. In the domain on the lower side of the curve, the NOx-signal offset value was 0.03 µA or smaller, which means a good result. As graphed in Fig. 8, the lower the porosity becomes, the better the result obtained was even with a small thickness. For example, when the porosity of the blocking portion 65 was set to 9%, a good result was obtained with a thickness of 25 µm or larger. When the porosity of the blocking portion 65 was set to 5% or lower, a good result was obtained with a thickness of 5 µm or larger.

### [EVALUATION TEST 4]

The durability of the sensor elements according to Example 2 and Comparative Example 1 was evaluated. Specifically, the sensor elements were put into an atmospheric air and were kept at a temperature (800°C) for normal operation by using a heater. In this state, the sensor elements were left for a predetermined duration. Subsequently, after the duration had elapsed, the value of the signal (the pump current Ip2 of the measurement pump cell 41) to be used in the measurement of NOx concentration in the sensor elements was measured in an atmosphere with a NOx concentration of 500 ppm (nitrogen concentration = 96.95%, oxygen concentration = 0%, NOx concentration = 500 ppm, and moisture content = 3%). The measurement of the signal value was performed for each of different durations of 0 hours, 1000 hours, 2000 hours, and 3000 hours. The results are graphed in Fig. 9. Fig. 9 illustrates the relationship between the duration and the rate of change in the signal from reference values. The reference values were the signal values obtained after the duration of 0 hours in Example 2 and Comparative Example 1. Fig. 9 means that as the absolute value of the negative rate of change in the signal became larger, the reduction in the sensitivity of the detection of NOx concentration that occurred with the increase in the duration became larger (the durability became lower). As can be seen from Fig. 9, compared with Comparative Example 1, Example 2 tended to exhibit only a slight reduction in the rate of change in the signal even after a long duration, and the absolute value of the rate of change in the signal tended to be small (the rate of change in the signal was close to 0%). In Example 2, since the blocking portion 65 (the outer blocking layer 67) was provided, unnecessary currents, such as noise, in the pump current Ip2 were reduced. Therefore, the loads imposed on the electrodes were smaller than in Comparative Example 1, which is assumed to have improved the durability.

The present application claims priority from Japanese Patent Application No. 2012-269569 filed on December 10, 2012, the entire contents of which are incorporated herein by reference.

### Industrial Applicability

The present invention is applicable to a gas sensor that detects the concentration of a specific gas, such as NOx, in a measurement-object gas, such as exhaust gas from an automobile.

### Reference Signs List

1 first substrate layer, 2 second substrate layer, 3 third substrate layer, 4 first solid-electrolyte layer, 5 spacer layer, 6 second solid-electrolyte layer, 6a nearest portion, 10, 310 gas inlet, 11 first diffusion-controlling portion, 12 buffer space, 13 second diffusion-controlling portion, 20, 320 first internal cavity, 21 main-pump cell, 22, 322 inner pump electrode, 22a ceiling electrode portion, 22b bottom electrode portion, 23, 323 outer pump electrode, 25 variable power supply, 30 third diffusion-controlling portion, 40, 340 second internal cavity, 41 measurement pump cell, 42 reference electrode, 43 reference-gas-introducing space, 44, 344 measuring electrode, 45 fourth diffusion-controlling portion, 46 variable power supply, 48 atmospheric-air-introducing layer, 50 auxiliary-pump cell, 51, 351 auxiliary-pump electrode, 51a ceiling electrode portion, 51b bottom electrode portion, 52 variable power supply, 60 fourth diffusion-controlling portion, 61, 361 third internal cavity, 65 blocking portion, 66 inner blocking layer, 67 outer blocking layer, 70 heater portion, 71 heater electrode, 72, 372 heater, 73 through hole, 74, 374 heater insulating layer, 75 pressure-releasing hole, 76, 276 lead wire, 80 main-pump-controlling oxygen-partial-pressure-detecting sensor cell, 81 auxiliary-pump-controlling oxygen-partial-pressure-detecting sensor cell, 82 measurement-pump-controlling oxygen-partial-pressure-detecting sensor cell, 83 sensor cell, 91 to 95, 192, 193, 294 lead wire, 99 straight line, 100, 300 gas sensor, 101, 307 sensor element, 101a to 101f first to sixth surfaces, 301 to 306 solid-electrolyte layer.

## Claims

1. A sensor element (101) comprising:
a multilayer structure including a plurality of oxygen-ion-conductive solid-electrolyte layers (1, 2, 3, 4, 5, 6) that are stacked one on top of another, and a measurement-object-gas-flowing portion provided in the multilayer structure and from one end of which a measurement-object gas is introduced into the multilayer structure;
a measuring electrode (44) exposed in a space (61) in which the measuring-electrode (44) is set and which is part of the measurement-object-gas-flowing portion;
an outer electrode (23) provided on an outer surface of the multilayer structure; and
a blocking portion (65) including at least one of an inner blocking layer (66) and an outer blocking layer (67), the inner blocking layer (66) covering at least part of an exposed portion where the solid-electrolyte layers (1, 2, 3, 4, 5, 6) are exposed as inner surfaces of the space (61) in which the measuring-electrode (44) is set, the inner blocking layer (66) not conducting one or more kinds of substances that contain oxygen, the outer blocking layer (67) being provided in a portion of the multilayer structure that is exposed to the measurement-object gas and covering at least part of a nearest portion (6a) that is at a shortest distance from the space (61) in which the measuring-electrode (44) is set among portions of outer surfaces of the multilayer structure where the solid-electrolyte layers (1, 2, 3, 4, 5, 6) are exposed, the outer blocking layer (67) not conducting one or more kinds of substances that contain oxygen
wherein the blocking portion (65) has a porosity of 5% or lower; and
wherein the blocking portion (65) is made of at least one selected from alumina, silica, mullite, silicon nitride and silicon carbide.

2. The sensor element (101) according to Claim 1, wherein the blocking portion (65) includes at least the outer blocking layer (67) of the inner blocking layer and the outer blocking layer.

3. The sensor element (101) according to Claim 2, wherein the outer blocking layer (67) covers the entirety of the nearest portion (6a).

4. The sensor element (101) according to any of Claims 1 to 3,
wherein an area ratio A/B of a covered area A by which the blocking portion (65) covers the solid-electrolyte layers (1, 2, 3, 4, 5, 6) to an exposed area B by which the solid-electrolyte layers (1, 2, 3, 4, 5, 6) are exposed as the inner surfaces of the space (61) in which the measuring-electrode (44) is set is 0.3 or greater.

5. The sensor element (101) according to any of Claims 1 to 4,
wherein the blocking portion (65) includes the inner blocking layer (66), and the inner blocking layer (66) has a thickness of 1 µm to 30 µm.

6. The sensor element (101) according to any of Claims 1 to 5,
wherein the blocking portion (65) includes the outer blocking layer (67), and the outer blocking layer (67) has a thickness of 1 µm to 30 µm.

7. The sensor element (101) according to any of Claims 1 to 6,
wherein the blocking portion (65) includes the inner blocking layer (66), and the inner blocking layer (66) covers at least part of the inner surfaces of the space (61) in which the measuring-electrode (44) is set, the part being opposite the nearest portion (6a).

8. The sensor element (101) according to any of Claims 1 to 7,
wherein the blocking portion (65) includes the inner blocking layer (66) and the outer blocking layer (67).

9. The sensor element (101) according to any of Claims 1 to 8,
wherein the multilayer structure is a rectangular parallelepiped,
wherein the blocking portion (65) includes the outer blocking layer (67), and the outer blocking layer (67) is provided on each of a plurality of outer surfaces of the multilayer structure, and
wherein the outer blocking layer (67) covers the entirety of a projection area defined as a projection of the space (61) in which the measuring-electrode (44) is set and which is projected perpendicularly onto each of the plurality of outer surfaces each having the outer blocking layer (67).

10. A gas sensor (100) comprising the sensor element (101) according to any of Claims 1 to 9.

11. The gas sensor (100) according to Claim 10, wherein a first internal cavity (20) and a second internal cavity (40) are provided in that order in a region of the measurement-object-gas-flowing portion from an inlet (10) for the measurement-object gas to the space (61) in which the measuring-electrode (44) is set,
wherein the gas sensor (100) includes
a reference electrode (42) provided in the multilayer structure and into which a reference gas with reference to which a concentration of a specific gas in the measurement-object gas is detected is introduced;
detecting device (41) that detects the concentration of the specific gas in the measurement-object gas on the basis of a current carried when the measurement-object gas is introduced into the space (61) in which the measuring-electrode (44) is set and when oxygen is pumped out or pumped in via the measuring electrode (44) and the outer electrode (23);
a main-pump cell (21) that applies a control voltage between an outer main-pump electrode (23) and an inner main-pump electrode (22) on the basis of an electromotive force generated between the inner main-pump electrode (22) and the reference electrode (42), the inner main-pump electrode (22) being provided on a portion of solid electrolyte that faces the first internal cavity (20), the outer main-pump electrode (23) being provided on an outer surface of the multilayer structure, the main-pump cell (21) pumping out or pumping in oxygen via the inner main-pump electrode (22) and the outer main-pump electrode (23) such that the concentration of oxygen in the first internal cavity (20) becomes a predetermined main-pump target concentration; and
an auxiliary-pump cell (50) that applies a control voltage between an outer auxiliary-pump electrode (23) and an inner auxiliary-pump electrode (51) on the basis of an electromotive force generated between the inner auxiliary-pump electrode (51) and the reference electrode (42), the inner auxiliary-pump electrode (51) being provided on a portion of the solid-electrolyte layers (1, 2, 3, 4, 5, 6) that faces the second internal cavity (40), the outer auxiliary-pump electrode (23) being provided on an outer surface of the multilayer structure, the auxiliary-pump cell (50) pumping out or pumping in oxygen via the inner auxiliary-pump electrode (51) and the outer auxiliary-pump electrode (23) such that the concentration of oxygen in the second internal cavity (40) becomes a predetermined auxiliary-pump target concentration.

## Patentansprüche

1. Sensorelement (101), das Folgendes umfasst:
eine Mehrschichtstruktur, die eine Vielzahl von Sauerstoffionen-leitenden Festelektrolytschichten (1, 2, 3, 4, 5, 6), die aufeinandergestapelt sind, und einen Messobjektgasströmungs-Abschnitt umfasst, der in der Mehrschichtstruktur bereitgestellt ist, und von dessen einem Ende ein Messobjektgas in die Mehrschichtstruktur eingeleitet wird;
eine Messelektrode (44), die in einem Raum (61) freiliegt, in dem die Messelektrode (44) angeordnet ist und der Teil des Messobjektgasströmungs-Abschnitts ist;
eine Außenelektrode (23), die auf einer Außenfläche der Mehrschichtstruktur bereitgestellt ist; und
einen Blockierungsabschnitt (65), der zumindest eine von einer inneren Blockierungsschicht (66) und einer äußeren Blockierungsschicht (67) umfasst, wobei die innere Blockierungsschicht (66) zumindest einen Teil eines freiliegenden Abschnitts bedeckt, in dem die Festelektrolytschichten (1, 2, 3, 4, 5, 6) als Innenflächen des Raums (61) freiliegen, in dem die Messelektrode (44) angeordnet ist, wobei die innere Blockierungsschicht (66) eine oder mehrere Arten von Substanzen, die Sauerstoff enthalten, nicht leitet, wobei die äußere Blockierungsschicht (67) in einem Abschnitt der Mehrschichtstruktur bereitgestellt ist, der dem Messobjektgas gegenüber freiliegt, und zumindest einen Teil eines nächstgelegenen Abschnitts (6a) bedeckt, der sich von Abschnitten von Außenflächen der Mehrschichtstruktur, in dem die Festelektrolytschichten (1, 2, 3, 4, 5, 6) freiliegen, in einem geringsten Abstand zum Raum (61), in dem die Messelektrode (44) angeordnet ist, befindet, wobei die äußere Blockierungsschicht (67) eine oder mehrere Arten von Substanzen, die Sauerstoff enthalten, nicht leitet,
wobei der Blockierungsabschnitt (65) eine Porosität von 5 % oder weniger aufweist; und
wobei der Blockierungsabschnitt (65) aus zumindest einem besteht, das aus Aluminiumoxid, Silica, Mullit, Siliciumnitrid und Siliciumcarbid ausgewählt ist.

2. Sensorelement (101) nach Anspruch 1, wobei der Blockierungsabschnitt (65) zumindest die äußere Blockierungsschicht (67) der inneren Blockierungsschicht und die äußere Blockierungsschicht umfasst.

3. Sensorelement (101) nach Anspruch 2, wobei die äußere Blockierungsschicht (67) den gesamten nächstgelegenen Abschnitt (6a) bedeckt.

4. Sensorelement (101) nach einem der Ansprüche 1 bis 3, wobei ein Flächenverhältnis A/B einer bedeckten Fläche A, durch die der Blockierungsabschnitt (65) die Festelektrolytschichten (1, 2, 3, 4, 5, 6) bedeckt, zu einer freiliegenden Fläche B, durch die die Festelektrolytschichten (1, 2, 3, 4, 5, 6) als Innenflächen des Raums (61), in dem die Messelektrode (44) angeordnet ist, freiliegen, 0,3 oder mehr beträgt.

5. Sensorelement (101) nach einem der Ansprüche 1 bis 4, wobei der Blockierungsabschnitt (65) die innere Blockierungsschicht (66) umfasst und die innere Blockierungsschicht (66) eine Dicke von 1 µm bis 30 µm aufweist.

6. Sensorelement (101) nach einem der Ansprüche 1 bis 5, wobei der Blockierungsabschnitt (65) die äußere Blockierungsschicht (67) umfasst und die äußere Blockierungsschicht (67) eine Dicke von 1 µm bis 30 µm aufweist.

7. Sensorelement (101) nach einem der Ansprüche 1 bis 6, wobei der Blockierungsabschnitt (65) die innere Blockierungsschicht (66) umfasst und die innere Blockierungsschicht (66) zumindest einen Teil der Innenflächen des Raums (61) bedeckt, in dem die Messelektrode (44) angeordnet ist, wobei der Teil dem nächstgelegenen Abschnitt (6a) gegenüberliegt.

8. Sensorelement (101) nach einem der Ansprüche 1 bis 7, wobei der Blockierungsabschnitt (65) die innere Blockierungsschicht (66) und die äußere Blockierungsschicht (67) umfasst.

9. Sensorelement (101) nach einem der Ansprüche 1 bis 8,
wobei die Mehrschichtstruktur ein rechteckiges Parallelepiped ist,
wobei der Blockierungsabschnitt (65) die äußere Blockierungsschicht (67) umfasst, und die äußere Blockierungsschicht (67) auf jeder aus einer Vielzahl von Außenflächen der Mehrschichtstruktur bereitgestellt ist, und
wobei die äußere Blockierungsschicht (67) die Gesamtheit einer Projektionsfläche bedeckt, die als Projektion des Raums (61), in dem die Messelektrode (44) angeordnet ist, definiert ist, und die im rechten Winkel auf jede aus der Vielzahl von Außenflächen, die jeweils die äußere Blockierungsschicht (67) aufweisen, projiziert ist.

10. Gassensor (100), der ein Sensorelement (101) nach einem der Ansprüche 1 bis 9 umfasst.

11. Gassensor (100) nach Anspruch 10, wobei ein erster innerer Hohlraum (20) und ein zweiter innerer Hohlraum (40) in dieser Reihenfolge in einer Region des Messobjektgasströmungs-Abschnitts von einem Einlass (10) für das Messobjektgas zu dem Raum (61), in dem die Messelektrode (44) angeordnet ist, bereitgestellt sind,
wobei der Gassensor (100) Folgendes umfasst:
eine Referenzelektrode (42), die in der Mehrschichtstruktur bereitgestellt ist und in die ein Referenzgas mit Bezug auf welches eine Konzentration eines spezifischen Gases in dem Messobjektgas detektiert wird, eingeleitet wird;
eine Detektionsvorrichtung (41), die die Konzentration des spezifischen Gases in dem Messobjektgas auf Basis eines geführten Stroms detektiert, wenn das Messobjektgas in den Raum (61), in dem die Messelektrode (44) angeordnet ist, eingeleitet wird und wenn Sauerstoff über die Messelektrode (44) und die Außenelektrode (23) ausgepumpt oder eingepumpt wird;
eine Hauptpumpenzelle (21), die eine Steuerspannung zwischen einer äußeren Hauptpumpenelektrode (23) und einer inneren Hauptpumpenelektrode (22) auf Basis einer elektromotorischen Kraft anlegt, die zwischen der inneren Hauptpumpenelektrode (22) und der Referenzelektrode (42) erzeugt wird, wobei die innere Hauptpumpenelektrode (22) auf einem Abschnitt eines Festelektrolyts bereitgestellt ist, die dem ersten inneren Hohlraum (20) zugewandt ist, die äußere Hauptpumpenelektrode (23) auf einer Außenfläche der Mehrschichtstruktur bereitgestellt ist, die Hauptpumpenzelle (21) Sauerstoff über die innere Hauptpumpenelektrode (22) und die äußere Hauptpumpenelektrode (23) so ein- und auspumpt, dass die Sauerstoffkonzentration in dem ersten inneren Hohlraum (20) eine vorbestimmte Hauptpumpenzielkonzentration wird; und
eine Hilfspumpenzelle (50), die eine Steuerspannung zwischen einer äußeren Hilfspumpenelektrode (23) und einer inneren Hilfspumpenelektrode (51) auf Basis einer elektromotorischen Kraft anlegt, die zwischen der inneren Hilfspumpenelektrode (51) und der Referenzelektrode (42) erzeugt wird, wobei die innere Hilfspumpenelektrode (51) auf einem Abschnitt der Festelektrolytschichten (1, 2, 3, 4, 5, 6) bereitgestellt ist, der dem zweiten inneren Hohlraum (40) zugewandt ist, wobei die äußere Hilfspumpenelektrode (23) auf einer Außenfläche der Mehrschichtstruktur bereitgestellt ist, wobei die Hilfspumpenzelle (50) Sauerstoff über die innere Hilfspumpenelektrode (51) und die äußere Hilfspumpenelektrode (23) so aus- oder einpumpt, dass die Sauerstoffkonzentration in dem zweiten inneren Hohlraum (40) eine vorbestimmte Hilfspumpenzielkonzentration wird.

## Revendications

1. Elément capteur (101) comprenant :
une structure multicouche incluant une pluralité de couches d'électrolyte solide (1, 2, 3, 4, 5, 6) conductrices d'ions oxygène qui sont empilées les unes au-dessus des autres, et une section d'écoulement de gaz objet de mesure prévue dans la structure multicouche et depuis une extrémité de laquelle un gaz objet de mesure est introduit dans la structure multicouche ;
une électrode de mesure (44) exposée dans un espace (61) dans lequel est placée l'électrode de mesure (44) et qui fait partie de la section d'écoulement de gaz objet de mesure ;
une électrode externe (23) prévue sur une surface externe de la structure multicouche ; et
une section de blocage (65) incluant au moins une d'une couche de blocage interne (66) et d'une couche de blocage externe (67), la couche de blocage interne (66) couvrant au moins une partie d'une section exposée où les couches d'électrolyte solide (1, 2, 3, 4, 5, 6) sont exposées en tant que surfaces internes de l'espace (61) dans lequel est placée l'électrode de mesure (44), la couche de blocage interne (66) ne conduisant pas une ou plusieurs sortes de substances qui contiennent de l'oxygène, la couche de blocage externe (67) étant prévue dans une section de la structure multicouche qui est exposée au gaz objet de mesure et couvrant au moins une partie d'une section la plus proche (6a) qui se trouve à une distance la plus courte de l'espace (61) dans lequel est placée l'électrode de mesure (44) parmi les sections de surfaces externes de la structure multicouche où les couches d'électrolyte solide (1, 2, 3, 4, 5, 6) sont exposées, la couche de blocage externe (67) ne conduisant pas une ou plusieurs sortes de substances qui contiennent de l'oxygène,
dans lequel la section de blocage (65) présente une porosité inférieure ou égale à 5 % ; et
dans lequel la section de blocage (65) est constituée d'au moins un élément choisi parmi l'alumine, la silice, la mullite, le nitrure de silicium et le carbure de silicium.

2. Elément capteur (101) selon la revendication 1,
dans lequel la section de blocage (65) inclut au moins la couche de blocage externe (67) de la couche de blocage interne et de la couche de blocage externe.

3. Elément capteur (101) selon la revendication 2, dans lequel la couche de blocage externe (67) couvre la totalité de la section la plus proche (6a).

4. Elément capteur (101) selon l'une quelconque des revendications 1 à 3,
dans lequel un rapport d'aire A/B d'une aire couverte A de laquelle la section de blocage (65) couvre les couches d'électrolyte solide (1, 2, 3, 4, 5, 6) sur une aire exposée B de laquelle les couches d'électrolyte solide (1, 2, 3, 4, 5, 6) sont exposées en tant que surfaces internes de l'espace (61) dans lequel est placée l'électrode de mesure (44) est supérieur ou égal à 0,3.

5. Elément capteur (101) selon l'une quelconque des revendications 1 à 4,
dans lequel la section de blocage (65) inclut la couche de blocage interne (66), et la couche de blocage interne (66) présente une épaisseur de 1 µm à 30 µm.

6. Elément capteur (101) selon l'une quelconque des revendications 1 à 5,
dans lequel la partie de blocage (65) inclut la couche de blocage externe (67), et la couche de blocage externe (67) présente une épaisseur de 1 µm à 30 µm.

7. Elément capteur (101) selon l'une quelconque des revendications 1 à 6,
dans lequel la section de blocage (65) inclut la couche de blocage interne (66), et la couche de blocage interne (66) couvre au moins une partie des surfaces internes de l'espace (61) dans lequel est placée l'électrode de mesure (44), la partie étant opposée à la section la plus proche (6a).

8. Elément capteur (101) selon l'une quelconque des revendications 1 à 7,
dans lequel la section de blocage (65) inclut la couche de blocage interne (66) et la couche de blocage externe (67).

9. Elément capteur (101) selon l'une quelconque des revendications 1 à 8,
dans lequel la structure multicouche est un parallélépipède rectangle,
dans lequel la section de blocage (65) inclut la couche de blocage externe (67), et la couche de blocage externe (67) est prévue sur chacune d'une pluralité de surfaces externes de la structure multicouche, et
dans lequel la couche de blocage externe (67) couvre la totalité d'une aire de projection définie comme une projection de l'espace (61) dans lequel est placée l'électrode de mesure (44) et qui est projetée perpendiculairement sur chacune de la pluralité de surfaces externes présentant chacune la couche de blocage externe (67) .

10. Capteur de gaz (100) comprenant l'élément capteur (101) selon l'une quelconque des revendications 1 à 9.

11. Capteur de gaz (100) selon la revendication 10,
dans lequel une première cavité interne (20) et une seconde cavité interne (40) sont prévues dans cet ordre dans une région de la section d'écoulement de gaz objet de mesure depuis une entrée (10) pour le gaz objet de mesure vers l'espace (61) dans lequel est placée l'électrode de mesure (44),
dans lequel le capteur de gaz (100) inclut
une électrode de référence (42) prévue dans la structure multicouche et dans laquelle est introduit un gaz de référence en référence auquel une concentration d'un gaz spécifique dans le gaz objet de mesure est détectée ;
un dispositif de détection (41) qui détecte la concentration du gaz spécifique dans le gaz objet de mesure sur la base d'un courant porté lorsque le gaz objet de mesure est introduit dans l'espace (61) dans lequel est placée l'électrode de mesure (44) et lorsque de l'oxygène est pompé vers l'extérieur et l'intérieur par le biais de l'électrode de mesure (44) et de l'électrode externe (23) ;
une cellule de pompe principale (21) qui applique une tension de commande entre une électrode de pompe principale externe (23) et une électrode de pompe principale interne (22) sur la base d'une force électromotrice générée entre l'électrode de pompe principale interne (22) et l'électrode de référence (42), l'électrode de pompe principale interne (22) étant prévue sur une section d'électrolyte solide qui fait face à la première cavité interne (20), l'électrode de pompe principale externe (23) étant prévue sur une surface externe de la structure multicouche, la cellule de pompe principale (21) pompant vers l'intérieur et l'extérieur de l'oxygène par le biais de l'électrode de pompe principale interne (22) et de l'électrode de pompe principale externe (23) de telle sorte que la concentration d'oxygène dans la première cavité interne (20) devienne une concentration cible de pompe principale prédéterminée ; et
une cellule de pompe auxiliaire (50) qui applique une tension de commande entre une électrode de pompe auxiliaire externe (23) et une électrode de pompe auxiliaire interne (51) sur la base d'une force électromotrice générée entre l'électrode de pompe auxiliaire interne (51) et l'électrode de référence (42), l'électrode de pompe auxiliaire interne (51) étant prévue sur une section des couches d'électrolyte solide (1, 2, 3, 4, 5, 6) qui fait face à la seconde cavité interne (40), l'électrode de pompe auxiliaire externe (23) étant prévue sur une surface externe de la structure multicouche, la cellule de pompe auxiliaire (50) pompant vers l'extérieur ou l'intérieur de l'oxygène par le biais de l'électrode de pompe auxiliaire interne (51) et de l'électrode de pompe auxiliaire externe (23) de telle sorte que la concentration d'oxygène dans la seconde cavité interne (40) devienne une concentration cible de pompe auxiliaire prédéterminée.
